# EUROPEAN PATENT APPLICATION

(11) **EP 4 717 500 A1**
(43) Date of publication of application: **01.04.2026**
(21) Application number: 24895883.7
(22) Date of filing: 09.09.2024
(51) Int. Cl.: B60L 3/00, B60L 15/20, H02P 29/024

(54) **MOTOR CONTROLLER HIGH-VOLTAGE FAULT MANAGEMENT METHOD, AND VEHICLE**

(30) Priority: 28.11.2023 CN 202311607398
(71) Applicant: Wuxi InfiMotion Propulsion Technology Co., Ltd., Wuxi, Jiangsu 214181 (CN)
(72) Inventor: ZHANG, Hongwen, Wuxi, Jiangsu 214181 (CN); YU, Haisheng, Wuxi, Jiangsu 214181 (CN); ZHENG, Fuhui, Wuxi, Jiangsu 214181 (CN); ZHANG, Longlong, Wuxi, Jiangsu 214181 (CN)
(74) Representative: Elzaburu S.L.P.
(86) International application number: PCT/CN2024/117637
(87) International publication number: WO 2025/112784

(57) **Abstract**

The present application provides a method for managing high-voltage faults in a motor controller and a vehicle, which relates to the technical field of vehicles. The method includes: monitoring a state of a high-voltage relay in response to that the motor controller is in a torque control state; in response to receiving a disconnection signal of the high-voltage relay, performing debounce processing on the disconnection signal; in response to that a debounce processing result of the disconnection signal indicates that the disconnection signal is reliable, controlling a state of a power switch drive bridge according to a motor speed; continuing to monitor the state of the high-voltage relay, and monitoring a high-voltage interlock signal in response to still receiving the disconnection signal; in response to that the high-voltage interlock signal is in a normal state, monitoring a maximum output power of a power battery; in response to that the maximum output power of the power battery is less than or equal to a preset power threshold, controlling the motor controller to enter a fault state; in response to that the motor controller is in the fault state, determining a fault handling strategy based on a busbar voltage. The present application can prevent the motor controller from overreacting due to false alarms.

## Description

### TECHNICAL FIELD

The present application relates to the technical field of vehicles, and in particular to a method for managing high-voltage faults in a motor controller and a vehicle.

### BACKGROUND

For hybrid vehicles or electric vehicles, the motor controller is a critical component for controlling the electric drive system of the electric vehicles. The motor controller is susceptible to high-voltage fault conditions. For example, during the process that the vehicle is driving, the high-voltage relay signal, which represents the vehicle overall high-voltage state, may switch from a closed state to a disconnection state.

However, unexpected high-voltage shutdown during the process that the vehicle is driving can lead to serious consequences, such as safety risks, equipment damage, fire hazards, performance issues, and system failures, severely impacting the safety and performance of hybrid vehicles or electric vehicles.

### SUMMARY

The problem solved by the present application is how to handle high-voltage faults of the motor controller.

To achieve the above objectives, the present application provides a method for managing high-voltage faults in a motor controller and a vehicle.

In a first aspect, the present application provides a method for managing high-voltage faults in a motor controller, including:
monitoring a state of a high-voltage relay in response to that the motor controller is in a torque control state;
in response to receiving a disconnection signal of the high-voltage relay, performing debounce processing on the disconnection signal;
in response to that a debounce processing result of the disconnection signal indicates that the disconnection signal is reliable, controlling a state of a power switch drive bridge according to a motor speed;
continuing to monitor the state of the high-voltage relay, and monitoring a high-voltage interlock signal in response to still receiving the disconnection signal;
in response to that the high-voltage interlock signal is in a normal state, monitoring a maximum output power of a power battery; and
in response to that the maximum output power of the power battery is less than or equal to a preset power threshold, controlling the motor controller to enter a fault state.
In an embodiment, the controlling the state of the power switch drive bridge according to the motor speed includes:
in response to that the motor speed is greater than a preset speed threshold, controlling a lower bridge arm of the power switch drive bridge to actively short-circuit; and
in response to that the motor speed is less than or equal to the preset speed threshold, controlling an upper bridge and a lower bridge of the power switch drive bridge to be disconnected.

In an embodiment, after the controlling the state of the power switch drive bridge according to the motor speed, the method further includes:
in response to obtaining a closing signal of the high-voltage relay, performing debounce processing on the closing signal; and
in response to that a debounce processing result of the closing signal indicates that the closing signal is reliable, controlling a power switch driver to switch from an active short-circuit mode back to a duty cycle controller mode through the motor controller, to make the motor controller enter a normal control state.

In an embodiment, the method for managing high-voltage faults in the motor controller further includes:
in response to that the high-voltage interlock signal is in the fault state, performing debounce processing on a fault signal corresponding to the high-voltage interlock signal; and
in response to that a debounce processing result of the fault signal indicates that the fault state is reliable, controlling the motor controller to enter the fault state.

In an embodiment, the method for managing high-voltage faults in the motor controller further includes:
in response to that the maximum output power of the power battery is greater than the preset power threshold, monitoring the state of the high-voltage relay;
in response to receiving the disconnection signal of the high-voltage relay, controlling the motor controller to enter the fault state; and
in response to receiving a closing signal of the high-voltage relay, performing debounce processing on the closing signal; in response to that a debounce processing result of the closing signal indicates that the closing signal is reliable, controlling a power switch driver to switch to a duty cycle controller mode through the motor controller, to make the motor controller enter a normal control state.

In an embodiment, the method for managing high-voltage faults in the motor controller further includes:
in response to that the motor controller is in the fault state, determining a fault handling strategy based on a busbar voltage.

In an embodiment, the determining the fault handling strategy based on the busbar voltage includes:
judging a magnitude of the busbar voltage and a magnitude of a preset voltage threshold;
in response to that the busbar voltage is greater than the preset voltage threshold, activating active discharge; and
in response to that the busbar voltage is less than or equal to the preset voltage threshold, keeping the motor controller in the fault state until a vehicle stops and is powered off.

In an embodiment, the method for managing high-voltage faults in the motor controller further includes:
in response to that the motor controller is in the torque control state and a closing signal of the high-voltage relay is received, controlling the power switch drive bridge to switch to a duty cycle controller mode through the motor controller, to make the motor controller enter a normal control state.

In an embodiment, the method for managing high-voltage faults in the motor controller further includes:
in response to that the motor controller remains in the fault state until a vehicle stops and is powered off, the fault state is eliminated when the vehicle is started again.

In a second aspect, the present application provides a vehicle including a computer-readable storage medium and a processor, the computer-readable storage medium storing a computer program. When the computer program is read and executed by the processor, the method for managing high-voltage faults in the motor controller as mentioned above is implemented.

In the present application, when an unexpected high-voltage shutdown occurs during the process that the vehicle is driving, false alarms of fault signals can be avoided through a debounce processing mechanism. Then, by monitoring the high-voltage interlock signal, it can identify whether the fault is self-recoverable. Finally, by monitoring the maximum output power of the power battery, it determines whether the fault can be recovered. Therefore, it can quickly identify the authenticity of the fault signal after a high-voltage fault occurs, avoiding false alarms and incorrect operations, thereby making appropriate adjustments to prevent the motor controller from overreacting due to false alarms.

### BRIEF DESCRIPTION OF THE DRAWINGS

FIG. 1 is a flowchart of a method for managing high-voltage faults in a motor controller according to an embodiment of the present application.
FIG. 2 is a schematic diagram illustrating the judgment logic of the method for managing high-voltage faults in the motor controller according to an embodiment of the present application.

### DETAILED DESCRIPTION OF THE EMBODIMENTS

To make the above objectives, features, and advantages of the present application more apparent and understandable, the specific embodiments of the present application are described in detail below with reference to the accompanying drawings.

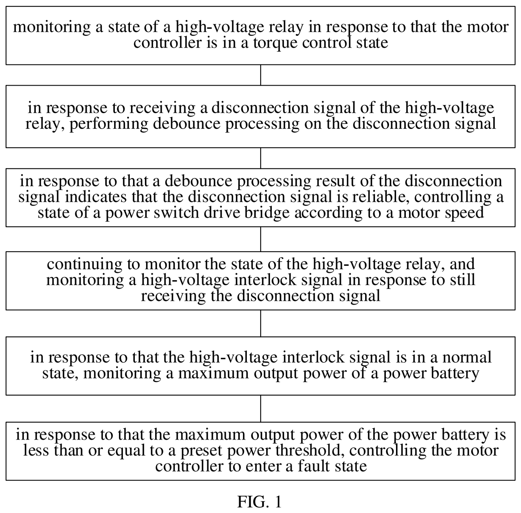

As shown in FIG. 1, an embodiment of the present application provides a method for managing high-voltage faults in a motor controller, which including following steps.

Step (1), the state of the high-voltage relay is monitored when the motor controller is in the torque control state.

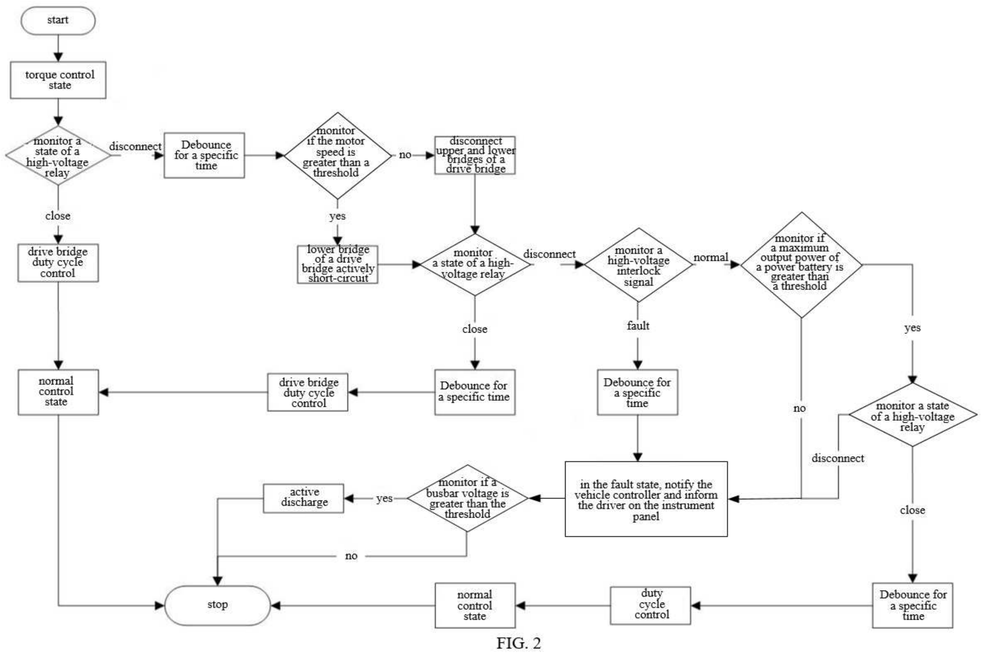

Specifically, as shown in FIG. 2, when the vehicle is driving normally, the motor controller is in the torque control state, and the state signal of the high-voltage relay is periodically monitored.

Step (2), if a disconnection signal of the high-voltage relay is received, a debounce processing is performed on the disconnection signal.

Specifically, as shown in FIG. 2, if the state signal shows a disconnection signal, debounce processing is performed on the disconnection signal (Debounce processing for a specific time). Debouncing processing refers to judging whether the signal changes continuously for a certain period of time. If the signal changes during this process, the debounce processing is restarted to avoid erroneous effects on subsequent functions due to signal fluctuations within a certain period of time (due to electromagnetic interference, sensor vibration, mechanical switches, and the like).

The judging result of signal debouncing depends on the specific implementation and application scenarios. Generally, the judging result of debouncing is usually based on a filtered signal, not the original bouncing signal. This ensures that the system makes accurate judgments on stable signals and resists errors caused by fluctuating. The specific judgment results may include following contents.
① Stable signal. After debounce processing, the system considers the signal to be stable and unaffected by fluctuating, that is, the signal is reliable.
② Invalid signal. If the fluctuating signal is too severe or frequent, debounce processing may not completely eliminate it, and the system may determine that the signal is invalid or unreliable.
③ Delay. Due to the delay introduced by filtering, the system may experience a certain degree of delay in situations requiring high real-time performance.
④ Threshold judgment. In some cases, a threshold can be set, and signals exceeding the threshold are considered valid signals, otherwise they are considered noise or fluctuating signals.

Step (3), when the debounce processing result of the disconnection signal indicates that the disconnection signal is reliable, the state of the power switch drive bridge is controlled according to the motor speed.

Specifically, as shown in FIG. 2, after the debounce judgment, if the state signal is still in the disconnected state (for example, the disconnection signal is reliable), the process proceeds to the next step to control the state of the power switch drive bridge, such as an Insulated-Gate Bipolar Transistor (IGBT) drive bridge, according to the motor speed.

Step (4), the state of the high-voltage relay is monitored. If the disconnection signal is still received, the high-voltage interlock signal is monitored.

Specifically, as shown in FIG. 2, the state of the high-voltage relay is monitored again. If the high-voltage relay is in the disconnected state, the high-voltage interlock signal is monitored.

Step (5), when the high-voltage interlock signal is in a normal state, the maximum output power of the power battery is monitored.

Specifically, as shown in FIG. 2, if the high-voltage interlock signal is in a normal state, it is monitored that whether the maximum output power of the power battery is greater than the threshold.

Step (6), when the maximum output power of the power battery is less than or equal to the preset power threshold, the motor controller is controlled to enter a fault state.

Specifically, as shown in FIG. 2, if the maximum output power of the power battery is less than or equal to the preset power threshold, it indicates that the power battery cannot provide power, and the possibility of self-recovery from the fault is extremely low. The motor controller will enter a fault state and report the fault to the vehicle controller, then the fault will be displayed on the instrument panel. In this embodiment, false alarms of the fault signal can be avoided through a debounce processing mechanism when an unexpected high-voltage shutdown occurs during the process that the vehicle is driving. Then, by monitoring the high-voltage interlock signal, it can identify whether the fault is self-recoverable. Finally, by monitoring the maximum output power of the power battery, it can determine whether the fault is recoverable. Therefore, it can quickly identify the authenticity of the fault signal after a high-voltage fault is reported, avoiding false alarms and incorrect operations, thereby making appropriate adjustments to prevent the motor controller from overreacting due to false alarms.

In an embodiment, the step of controlling the state of the power switch drive bridge based on the motor speed includes following steps.

When the motor speed is greater than a preset speed threshold, the lower bridge arm of the power switch drive bridge is controlled to actively short-circuit.

Specifically, as shown in FIG. 2, when the motor speed is greater than the preset speed threshold, the motor controller controls the lower bridge arm of the power switch drive bridge to actively short-circuit, preventing damage to the controller hardware due to the motor reverse electromotive force at high speeds.

When the motor speed is less than or equal to the preset speed threshold, an upper bridge and a lower bridge of the power switch drive bridge are controlled to disconnect.

Specifically, as shown in FIG. 2, when the motor speed is less than or equal to the preset speed threshold, the motor controller disconnects the power switch drive bridge, thereby disconnecting the connection between the high-voltage circuit and the motor controller.

In an embodiment, after controlling the state of the power switch drive bridge based on the motor speed, the method for managing high-voltage faults in the motor controller further includes following steps.

If a closing signal of the high-voltage relay is received, debounce processing is performed on the closing signal.

Specifically, as shown in FIG. 2, the state of the high-voltage relay is monitored again. If the high-voltage relay is in the closed state at this time, debounce processing is performed on the closing signal.

When the debounce processing result of the closing signal indicates that the closing signal is reliable, the motor controller controls the power switch driver to switch from the active short-circuit mode back to the duty cycle controller mode, so that the motor controller enters the normal control state.

Specifically, if the closed state remains after the debounce judgment, the motor controller controls the power switch driver to switch from the active short-circuit mode back to the duty cycle controller mode, thereby restoring to the normal control state until the vehicle stops and is powered off, and the driving cycle ends.

In an embodiment, the method for managing high-voltage faults in the motor controller further includes following steps.

When the high-voltage interlock signal is in a fault state, debounce processing is performed on the fault signal corresponding to the high-voltage interlock signal.

Specifically, as shown in FIG. 2, the state of the high-voltage interlock signal is monitored. If the high-voltage interlock signal is in a fault state, debounce processing is performed on the fault signal corresponding to the high-voltage interlock signal.

When the debounce processing result of the fault signal indicates that the fault state is reliable, the motor controller is controlled to enter the fault state.

Specifically, as shown in FIG. 2, if the fault state remains after the debounce judgment (Debounce processing for a specific time), it indicates that a fault has occurred in the high-voltage circuit, and the possibility of self-recovery from the fault is extremely low. The motor controller will enter the fault state and report the fault to the vehicle controller, then the fault is displayed on the instrument panel.

In an embodiment, the method for managing high-voltage faults in the motor controller further includes following steps.

When the maximum output power of the power battery is greater than the preset power threshold, the state of the high-voltage relay is monitored.

Specifically, as shown in FIG. 2, when the maximum output power of the power battery is greater than the preset power threshold, it indicates that the power battery is in a normal state. In this case, the state of the high-voltage relay is monitored.

If a disconnection signal from the high-voltage relay is received, the motor controller is controlled to enter a fault state.

Specifically, as shown in FIG. 2, if the high-voltage relay is still in the disconnected state, it indicates that the possibility of self-recovery from the fault state of the high-voltage relay is extremely low. The motor controller will enter a fault state and report the fault to the vehicle controller, then the fault is displayed on the instrument panel.

If the closing signal of the high-voltage relay is received, debounce processing is performed on the closing signal. When the debounce processing result of the closing signal indicates that the closing signal is reliable, the motor controller controls the power switch driver to switch to the duty cycle controller mode, so that the motor controller enters the normal control state.

Specifically, as shown in FIG. 2, if the high-voltage relay is in the closed state and remains in the closed state after debounce processing, it indicates that the fault state of the high-voltage relay has been recovered. The motor controller will control the power switch drive bridge to switch to the duty cycle control mode, and the motor controller remains in the normal control state, ensuring the normal operation of the vehicle.

In an embodiment, the method for managing high-voltage faults in the motor controller further includes following steps.

When the motor controller is in a fault state, a fault handling strategy is determined based on the busbar voltage.

Specifically, as shown in FIG. 2, the motor controller monitors the busbar voltage in the electrical circuit and determines the fault handling strategy based on the busbar voltage.

In an embodiment, determining the fault handling strategy based on the busbar voltage includes:
judging the magnitude of the busbar voltage and the magnitude of a preset voltage threshold.

Specifically, as shown in FIG. 2, the motor controller monitors whether the busbar voltage in the electrical circuit is greater than a preset voltage threshold.

If the busbar voltage is greater than the preset voltage threshold, active discharge is activated.

Specifically, as shown in FIG. 2, if the busbar voltage is greater than the preset voltage threshold, the active discharge function is activated to discharge the high voltage in the electrical circuit.

If the busbar voltage is less than or equal to the preset voltage threshold, the motor controller remains in a fault state until it stops and is powered off.

Specifically, as shown in FIG. 2, if the busbar voltage is less than or equal to the preset voltage threshold, active discharge is not required, and the motor controller remains in a fault state until it stops and is powered off, ending the driving cycle.

In an embodiment, the method for managing high-voltage faults in the motor controller further includes following steps.

When the motor controller is in the torque control state, if the closing signal of the high-voltage relay is received, the motor controller controls the power switch drive bridge to switch to the duty cycle controller mode, so that the motor controller enters the normal control state.

Specifically, during the process that the vehicle is normally driving, the motor controller is in the torque control state, the state signal of the high-voltage relay is periodically monitored. If the signal is in the closed state, indicating that the high-voltage relay is working normally, the motor controller will control the power switch drive bridge to be in duty cycle control mode, and the entire controller is in the normal control state until the vehicle stops and is powered off, thus ending a driving cycle.

In an embodiment, the method for managing high-voltage faults in the motor controller further includes following steps.

If the motor controller remains in a fault state until the vehicle stops and is powered off, the fault state is eliminated when the vehicle is started next time.

Specifically, when the motor controller remains in a fault state until the vehicle stops and is powered off, the fault state will be automatically eliminated when the vehicle is started next time.

The following describes the process of the method for managing high-voltage faults in the motor controller in different scenarios, in conjunction with FIG. 2.
(1) Scenario 1. Starting - in the torque control state - monitoring the high-voltage relay state - in the duty cycle control mode of the drive bridge - in the normal control state - stopping.
(2) Scenario 2. Starting - in the torque control state - monitoring the high-voltage relay state - performing debounce for a specific time - monitoring if the motor speed is greater than the threshold - monitoring the high-voltage relay state - performing debounce for a specific time - in the duty cycle control mode of the drive bridge - in the normal control state - stopping.
(3) Scenario 3. Starting - in the torque control state - monitoring the high-voltage relay state - performing debounce for a specific time - monitoring if the motor speed is greater than the threshold - monitoring the high-voltage relay state - monitoring the high-voltage interlock signal - performing debounce for a specific time - in the fault state, notifying the vehicle controller and informing the driver on the instrument panel - monitoring if the busbar voltage is greater than the threshold - stopping.
(4) Scenario 4. Starting - in the torque control state - monitoring the high-voltage relay state - performing debounce for a specific time - monitoring if the motor speed is greater than the threshold - monitoring the high-voltage relay state - monitoring the high-voltage interlock signal - monitoring if the maximum output power of the power battery is greater than the threshold - in the fault state, notifying the vehicle controller and informing the driver on the instrument panel - monitoring if the busbar voltage is greater than the threshold - stopping.
(5) Scenario 5. Starting - in the torque control state - monitoring the high-voltage relay state - performing debounce for a specific time - monitoring if the motor speed is greater than the threshold - monitoring the high-voltage relay state - monitoring the high-voltage interlock signal - monitoring if maximum output power of the power battery is greater than the threshold - monitoring the high-voltage relay state - in the fault state, notifying the vehicle controller and informing the driver on the instrument panel - monitoring if the busbar voltage is greater than the threshold - stopping.
(6) Scenario Six. Starting - in the torque control state - monitoring the high-voltage relay state - performing debounce for a specific time - monitoring whether the motor speed is greater than the threshold - monitoring the high-voltage relay state - monitoring the high-voltage interlock signal - monitoring whether the maximum output power of the power battery is greater than the threshold - monitoring the high-voltage relay state - performing debounce for a specific time - in the duty cycle control - in the normal control state - stopping.

Another embodiment of the present application provides a vehicle, including a computer-readable storage medium storing a computer program and a processor. When the computer program is read and executed by the processor, it implements the above method for managing high-voltage faults in the motor controller.

Although the present application has been disclosed as above, the scope of the present application is not limited thereto. Those skilled in the art can make various changes and modifications without departing from the spirit and scope of the present application, and these changes and modifications will fall within the scope of the present application.

## Claims

1. A method for managing high-voltage faults in a motor controller, **characterized by** comprising:
monitoring a state of a high-voltage relay in response to that the motor controller is in a torque control state;
in response to receiving a disconnection signal of the high-voltage relay, performing debounce processing on the disconnection signal;
in response to that a debounce processing result of the disconnection signal indicates that the disconnection signal is reliable, controlling a state of a power switch drive bridge according to a motor speed;
continuing to monitor the state of the high-voltage relay, and monitoring a high-voltage interlock signal in response to still receiving the disconnection signal;
in response to that the high-voltage interlock signal is in a normal state, monitoring a maximum output power of a power battery; and
in response to that the maximum output power of the power battery is less than or equal to a preset power threshold, controlling the motor controller to enter a fault state.

2. The method for managing high-voltage faults in the motor controller according to claim 1, wherein the controlling the state of the power switch drive bridge according to the motor speed comprises:
in response to that the motor speed is greater than a preset speed threshold, controlling a lower bridge arm of the power switch drive bridge to actively short-circuit; and
in response to that the motor speed is less than or equal to the preset speed threshold, controlling an upper bridge and a lower bridge of the power switch drive bridge to be disconnected.

3. The method for managing high-voltage faults in the motor controller according to claim 1, wherein after the controlling the state of the power switch drive bridge according to the motor speed, the method further comprises:
in response to obtaining a closing signal of the high-voltage relay, performing debounce processing on the closing signal; and
in response to that a debounce processing result of the closing signal indicates that the closing signal is reliable, controlling a power switch driver to switch from an active short-circuit mode back to a duty cycle controller mode through the motor controller, to make the motor controller enter a normal control state.

4. The method for managing high-voltage faults in the motor controller according to claim 1, further comprising:
in response to that the high-voltage interlock signal is in the fault state, performing debounce processing on a fault signal corresponding to the high-voltage interlock signal; and
in response to that a debounce processing result of the fault signal indicates that the fault state is reliable, controlling the motor controller to enter the fault state.

5. The method for managing high-voltage faults in the motor controller according to claim 1, further comprising:
in response to that the maximum output power of the power battery is greater than the preset power threshold, monitoring the state of the high-voltage relay;
in response to receiving the disconnection signal of the high-voltage relay, controlling the motor controller to enter the fault state; and
in response to receiving a closing signal of the high-voltage relay, performing debounce processing on the closing signal; in response to that a debounce processing result of the closing signal indicates that the closing signal is reliable, controlling a power switch driver to switch to a duty cycle controller mode through the motor controller, to make the motor controller enter a normal control state.

6. The method for managing high-voltage faults in the motor controller according to claim 1, further comprising:
in response to that the motor controller is in the fault state, determining a fault handling strategy based on a busbar voltage.

7. The method for managing high-voltage faults in the motor controller according to claim 6, wherein the determining the fault handling strategy based on the busbar voltage comprises:
judging a magnitude of the busbar voltage and a magnitude of a preset voltage threshold;
in response to that the busbar voltage is greater than the preset voltage threshold, activating active discharge; and
in response to that the busbar voltage is less than or equal to the preset voltage threshold, keeping the motor controller in the fault state until a vehicle stops and is powered off.

8. The method for managing high-voltage faults in the motor controller according to claim 1, further comprising:
in response to that the motor controller is in the torque control state and a closing signal of the high-voltage relay is received, controlling the power switch drive bridge to switch to a duty cycle controller mode through the motor controller, to make the motor controller enter a normal control state.

9. The method for managing high-voltage faults in the motor controller according to claim 1, further comprising:
in response to that the motor controller remains in the fault state until a vehicle stops and is powered off, the fault state is eliminated when the vehicle is started again.

10. A vehicle, **characterized by** comprising a computer-readable storage medium and a processor, the computer-readable storage medium storing a computer program, wherein when the computer program is read and executed by the processor, the method for managing high-voltage faults in the motor controller according to any one of claims 1 to 9 is implemented.
